# EUROPEAN PATENT APPLICATION

(11) **EP 1 990 958 A1**
(43) Date of publication of application: **12.11.2008**
(21) Application number: 07720280.2
(22) Date of filing: 28.02.2007
(51) Int. Cl.: H04L 12/56

(54) **METHOD FOR TESTING SAFETY ACCESS PROTOCOL CONFORMITY OF ACCESS POINT AND APPARATUS THEREOF**

(30) Priority: 28.02.2006 CN 200610041847
(71) Applicant: China Iwncomm Co., Ltd, Shaanxi Province 710075 (CN)
(72) Inventor: ZHANG, Bianling, Shaanxi 710075 (CN); CAO, Jun, Shaanxi 710075 (CN); TU, Xuefeng, Shaanxi 710075 (CN)
(74) Representative: Schäflein, Christian Georg
(86) International application number: PCT/CN2007/000636
(87) International publication number: WO 2007/098693

(57) **Abstract**

A method and apparatus for testing safety access protocol conformity of access point includes the follow steps: capturing certification protocol data packet generated in safety access certification procedure of the access point, detecting and analyzing package format and protocol flow process of the safety access protocol data packet. Test result does not depend on implement of high layer in according to the present invention, and it is possible to achieve true test result even if implement of a standard device is not exact, so it increases the veracity of test result; further, it is possible to accurately fmd out the false place of protocol implement by capturing detail information from protocol data packets in according to the present invention, so it increases simulation test for possible abnormal situation and ensure the product of passing test accord with standard regulation and interoperation.

## Description

This application claims priority to Chinese Patent Application No. 200610041847.X, filed on February 28, 2006 and entitled "METHOD AND SYSTEM FOR TESTING CONFORMITY OF SECURE ACCESS PROTOCOL OF ACCESS POINT", which is hereby incorporated by reference in its entirety.

### Field of the Invention

The present invention relates to the field of testing a network secure access protocol, particularly to a method and device for testing conformity of a secure access protocol at an access point.

### Background of the Invention

Increasing types of services are carried by Internet Protocol (IP) networks, which have been deployed in various applications of the national economy and society. In a wireless IP network, data is transmitted via a radio wave, so that the feature of the network of being physically open has stepped into a new phase. Therefore, a secure access has become a crucial issue for secure operations of wired and wireless networks.

A secure access system of an IP network primarily involves three network entities, i.e., a network terminal, an access point (AP) and an authentication server. Particularly, the network terminal is used for requesting for an access to the network to share various resources provided in the network; the access point, which is an edge equipment of the IP Internet, is used for providing an access service for a network user; and the authentication server is used for providing a user identity authentication service.

Currently, test systems for a secure access protocol at an access point primarily include an interoperation test system proposed for the Institute of Electrical and Electronics Engineers (IEEE) 802.11 Standard by the Wireless Fidelity (WI-FI) Union and an auxiliary management test system for some wireless local area network applications. The auxiliary management test system generally provides information related to installation and application of a network system by monitoring statuses of a physical channel and the network. The interoperation test system of the WI-FI Union verifies correctness of the protocol implementation in an equipment under test by testing interoperability between the equipment and a reference equipment and performance of communication between these equipments, i.e., by a protocol conformity check.

In the prior art, a conformity test is conducted by means of a typical application. In other words, the conformity test is conducted by the interoperability of an upper-layer protocol between the reference equipment and the equipment under test. A test result is dependent upon the implementation of the upper-layer protocol at the communication peers and may be deviant. For example, it is possible that the equipment under test can not interoperate with the reference equipment although the implementation of the secure access protocol at the equipment under test is correct, and such a test may be incomplete. Due to that the test result is determined according to the interoperability and the communication performance, correctness of the test result may be influenced greatly by the correctness of the implementation of the reference equipment; and even if the test result is correct, it may be still difficult for a tester to obtain error locating information for the equipment under test which does not pass the test.

### Summary of the Invention

In order to address the disadvantages described above, the present invention provides a method and device for testing conformity of a secure access protocol at an access point, which can improve accuracy of a test result and lower a correctness requirement on the implementation of a reference equipment.

A solution of the invention is a method for testing conformity of a secure access protocol at an access point, which includes the steps of:
capturing a data packet of a secure access protocol in a secure access authentication process at an access point under test; and
analyzing and checking an encapsulation format of the captured data packet of the secure access protocol and a protocol flow.

The secure access protocol may be the Wireless Local Area Network Authentication and Privacy Infrastructure (WAPI) protocol or the IEEE 802.11i protocol.

When the secure access protocol is the WAPI protocol, the method further includes: checking interoperability between the access point under test and a reference terminal in the case of a combination of WAPI enabling configurations at the reference terminal and the access point under test.

The combination of WAPI enabling configurations at the reference terminal and the access point under test includes as follows:
1.1) The reference terminal enables a WAPI security mechanism with WAI pre-shared key authentication and key management, and the access point under test enables a WAPI security mechanism with certificate authentication and key management; and
1.2) The access point under test enables the WAPI security mechanism with WAI pre-shared key authentication and key management, and the reference terminal enables the WAPI security mechanism with certificate authentication and key management.

The data packet of the secure access protocol includes an authentication activation packet, an access authentication request, a certificate authentication request, a certificate authentication response, an access authentication response, a unicast key negotiation request, a unicast key negotiation response, a unicast key negotiation confirmation packet, a multicast key announcement and/or a multicast key announcement response in the WAI; and/or a unicast data frame and a multicast data frame in the Wireless Local Area Network Privacy Infrastructure (WPI).

The method further includes that the access point under test does not pass the test if the captured data packets of the secure access protocol are less than the preset protocol data packets.

For the authentication activation packet, the analyzing and checking of the encapsulation format of the captured data packet of the secure access protocol includes:
2.1) Checking whether a version number conforms to a standard;
2.2) Checking whether a value of a data length field is consistent with a length of a data field; and
2.3) Verifying whether formats of an Authentication Service Unit (ASU) identity field, a terminal certificate field and an Elliptical Curve Key Exchange (ECDH) parameter field are correct.

For the certificate authentication request, the analyzing and checking of the encapsulation format of the captured data packet of the secure access protocol includes:
3.1) Checking whether a version number conforms to a standard;
3.2) Checking whether a value of a data length field is consistent with a length of a data field;
3.3) Comparing contents of a reference terminal certificate field with reference terminal certificate contents stored locally to determine whether they are identical;
3.4) Comparing contents of an access-point-under-test certificate field with access point certificate contents stored locally to determine whether they are identical; and
3.5) Comparing a value of an Authentication Supplicant Entity (ASUE) query field with a value of the ASUE query filed in an access authentication request packet sent by the reference terminal to determine whether the values are identical.

For the access authentication response, the analyzing and checking of the encapsulation format of the captured data packet of the secure access protocol includes:
4.1) Checking whether a version number conforms to a standard;
4.2) Checking whether a value of a data length field is consistent with a length of a data field;
4.3) Comparing contents of a reference terminal certificate field in a reference terminal certificate authentication result information field in a composite certificate verification result with reference terminal certificate contents stored locally to determine whether they are identical, and checking whether a value of a reference terminal certificate authentication result code field is within a range defined in the standard;
4.4) Comparing contents of an access-point-under-test certificate field in an access-point-under-test certificate authentication result information field with access point certificate contents stored locally to determine whether they are identical, and checking whether a value of an access-point-under-test certificate authentication result code field is within a range defined in the standard; and
4.5) Comparing a value of a length sub-field in an AE signature field with a length of a content sub-field to determine whether the values are identical, and determining whether the value of the length sub-field in the AE signature field is consistent with a valid length value specified in the standard.

For the unicast key negotiation request, the analyzing and checking of the encapsulation format of the captured data packet of the secure access protocol includes:
5.1) Checking whether a version number conforms to a standard;
5.2) Checking whether a value of a data length field is consistent with a length of a data field;
5.3) Verifying whether a length of a BKID field conforms to the standard; and
5.4) Checking whether values of a Unicast Session Key Identifier (USKID) field and an AE query field conform to the standard.

For the unicast key negotiation confirmation, the analyzing and checking of the encapsulation format of the captured data packet of the secure access protocol includes:
6.1) Checking whether a version number conforms to a standard;
6.2) Checking whether a value of a data length field is consistent with a length of a data field; and
6.3) Checking whether length fields of Base Key Identifier (BKID), USKID, Address Index (ADDID), ASUE, WAPI Information Element (WIE) and message authentication code fields conform to the standard.

For the multicast key announcement, the analyzing and checking of the encapsulation format of the captured data packet of the secure access protocol includes:
7.1) Checking whether a version number conforms to a standard;
7.2) Checking whether a value of a data length field is consistent with a length of a data field;
7.3) Checking whether a value of a Multicast Session Key Identifier (MSKID) field is within a range specified in the standard;
7.4) Checking whether a value of a USKID field is within a range specified in the standard;
7.5) Checking whether length fields of the ADDID, data serial number and key announcement identifier fields conform to the standard;
7.6) Comparing a value of a length sub-field in a key data field with a length of a content sub-field to determine whether they are identical; and
7.7) Checking whether a length value of a message authentication code filed is consistent with that specified in the standard.

For the unicast data frame, the analyzing and checking of the encapsulation format of the captured data packet of the secure access protocol includes:
8.1) Checking whether a value of a session key index field is within a range specified in a standard;
8.2) Checking whether a value of a data packet serial number field is within a range specified in the standard; and
8.3) Determining whether the value of the data packet serial number field is odd.

For the multicast data frame, the analyzing and checking of the encapsulation format of the captured data packet of the secure access protocol includes:
9.1) Checking whether a value of a session key index field is within a range specified in a standard;
9.2) Checking whether a value of a data packet serial number field is within a range specified in the standard.

A method for testing conformity of a secure access protocol at an access point includes the steps of:
capturing a data packet of a secure access protocol in a secure access authentication process at an access point under test; and
passing the test if the captured data packet of the secure access protocol conforms to a preset condition.

The preset condition may include that the captured data packets of the secure access protocol are no less than preset types of data packets of the protocol.

The preset condition may include that the sequence of capturing data packets of the secure access protocol conforms to a specification in the protocol.

The preset condition may include that fields encapsulated in the captured preset type of data packet of the secure access protocol conform to specifications in the protocol;
where the preset type of data packet of the secure access protocol includes an authentication activation packet, a certificate authentication request, an access authentication response, a unicast key negotiation request, a unicast key negotiation confirmation, a multicast key announcement, a unicast data frame and/or a multicast data frame.

The secure authentication protocol is the WAPI protocol, and the method further includes: checking interoperability between the access point under test and a reference terminal in the case of a combination of WAPI enabling configurations at the access point under test and the reference terminal.

A device for testing conformity of a secure access protocol at an access point is provided, and the device includes a data packet capture unit and a data packet check unit.

The data packet capture unit is adapted to capture a data packet of a secure access authentication protocol in a secure access authentication process at an access point under test.

The data packet check unit is adapted to check whether the captured data packet conforms to a preset condition, and a test is passed if the captured data packet conforms to the preset condition.

The preset condition may include that the captured data packets of the secure access protocol are no less than preset types of data packets of the protocol.

The preset condition may include that a sequence of capturing data packets of the secure access protocol conforms to a specification in the protocol.

The device further includes a storage unit adapted to store an access point certificate of the access point under test.

The preset condition may include that fields encapsulated in the captured preset type of data packet of the secure access protocol conform to specifications in the protocol;
the preset type of data packet of the secure access protocol includes an authentication activation packet, a certificate authentication request, an access authentication response, a unicast key negotiation request, a unicast key negotiation confirmation, a multicast key announcement, a unicast data frame and/or a multicast data frame; and
the checking of whether the captured data packet conforms to the preset condition includes checking based on the access point certificate of the access point under test.

The secure access protocol is the WAPI protocol.

The invention can be used to test correctness and conformity of the implementation of a secure access protocol at an access point. With the invention, a data packet of the secure access protocol in a secure access authentication process at the access point under test is captured and checked, so that a test result independent of the implementation of an upper-layer protocol, and a correct test result can be obtained regardless of deviant implementation of the reference equipment, thereby improving correctness of the test result.

Additionally in the invention, with the parsing and checking of the encapsulation of the captured data packet of the secure access protocol and a protocol flow, not only a check result can be obtained, but also an error in the implementation of the protocol can be located precisely in accordance with detailed information obtained from the data packet of the protocol.

Furthermore, the invention can test a combination of WAPI enabling configurations at the access point under test and the reference terminal, and additionally introduce a simulative test of a possible exception, thereby ensuring that a product which passes the test conforms to the standard and the interoperability.

### Brief Description of the Drawings

Figure 1 illustrates a topology diagram of the system according to the present invention;

Figure 2 illustrates a flow chart of the conformity test method according to an embodiment of the present invention; and

Figure 3 illustrates a schematic diagram of a structure of the conformity test device according to the present invention.

### Detailed Description of the Invention

Both the WAPI protocol and the IEEE 802.11i protocol are applicable to the inventive method including the following steps.

1) A process of authenticating a secure access protocol is activated;

2) A data packet of the secure access protocol generated in the authentication process is captured; and

3) An encapsulation format of the captured data packet of the secure access protocol and a protocol flow are analyzed and checked.

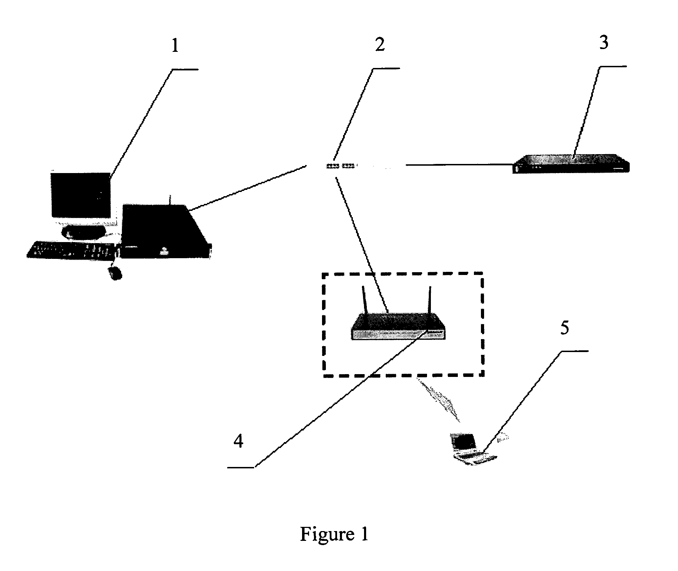

The invention can be applicable to the architecture as illustrated in Figure 1, which includes a monitoring controller 1, a reference authentication server 3, a reference terminal 5, a hub 2 and an access point under test 4. The monitoring controller 1, the reference authentication server 3 and the access point under test 4 are connected with the hub 2, and the reference terminal 5, which may be a notebook PC with a network adaptor, is linked with the access point under test 4 over a wireless link.

The reference authentication server 3 issues and installs the access point and reference terminal certificates on the reference terminal 5, the access point under test 4 and the monitoring controller 1. After the WAPI is initiated on the access point under test 4 and the reference terminal 5, the reference terminal 5 is linked with the access point under test 4, and the monitoring controller 1 captures a data packet of the WAPI protocol in a WAPI identity authentication process and provides an analysis result.

It shall be noted that the monitoring controller 1 can be a separate device, or alternatively a network device integrated with functions of a monitoring controller.

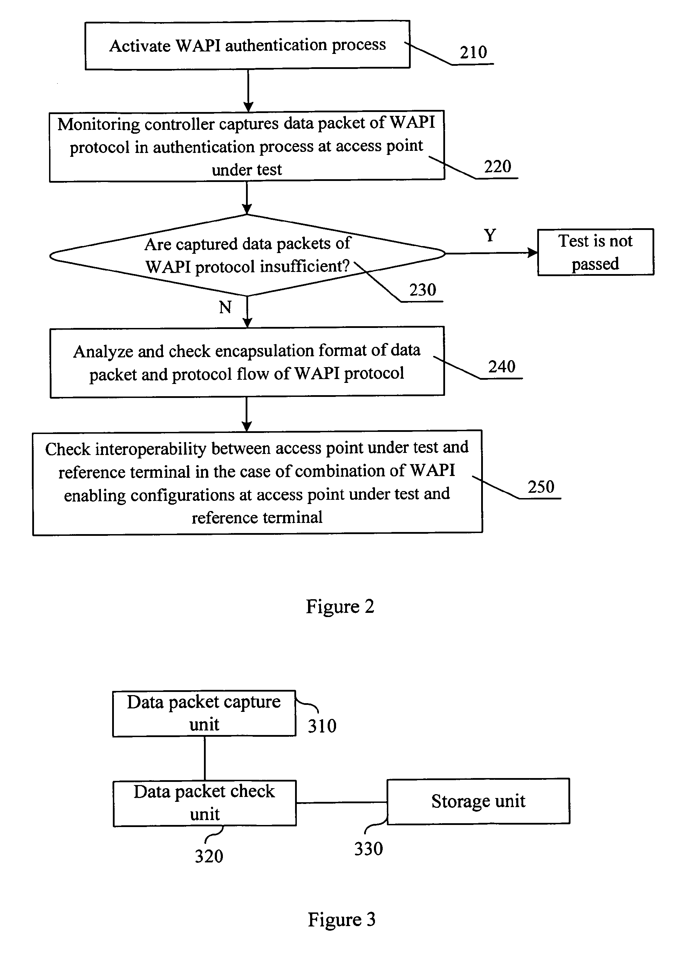

In an embodiment in which the secure access protocol is the WAPI protocol, a specific test flow of the method is illustrated in Figure 2 and includes the following steps.

210. A process of authenticating the WAPI protocol is activated, in other words, a WAPI identity authentication process is started for an access point under test;

220. The monitoring controller captures data packets of the WAPI protocol in the authentication process of the access point under test; and

230. The access point under test does not pass the WAPI test if the captured data packets of the WAPI protocol are insufficient; otherwise the flow proceeds to process the captured data in step 240.

In the WAPI identity authentication process at the access point under test, a series of data packets of the WAPI protocol need to be exchanged between the access point under test and the reference equipments (including the reference terminal and the reference authentication server). The tester can preset that which data packets of the WAPI protocol are to be captured by the monitoring controller according to application requirements, and determine that the access point under test does not pass the test when the captured data packets of the WAPI protocol are less than the preset types of data packets of the WAPI protocol.

The data packet of the WAPI protocol which may be captured includes an authentication activation packet, an access authentication request, a certificate authentication request, a certificate authentication response, an access authentication response, a unicast key negotiation request, a unicast key negotiation response, a unicast key negotiation confirmation, a multicast key announcement, a multicast key announcement response, etc., in the WAI; and a unicast data frame, a multicast data frame, etc., in the WPI.

240. An encapsulation format of the captured data packet of the WAPI protocol and a protocol flow are analyzed and checked.

The tester can preset a condition of passing the WAPI test according to application requirements. For example, the tester can preset that the test is not passed if the sequence of capturing data packets of the WAPI protocol does not conform to a flow specified in the protocol or if contents of a certain field in a certain data packet of the WAPI protocol do not conform to specifications in the protocol.

Descriptions is given below by examples in which it is checked whether the authentication activation packet, the certificate authentication request, the access authentication response, the unicast key negotiation request, the unicast key negotiation confirmation, the multicast key announcement, the unicast data frame and the multicast data frame generated by the access point under test conform to specifications in the protocol, and some additional captured data packets of the protocol can be used to assist in analyzing correctness of the data packets of the protocol generated by the access point under test.

A process of analyzing and checking an authentication activation packet can be as follows.

1.1) It is checked whether a version number conforms to the standard;

1.2) It is checked whether a value of a data length field is consistent with a length of a data field;

1.3) It is verified whether formats of an ASU identity field, a terminal certificate field and an ECDH parameter fields are correct.

A process of analyzing and checking a certificate authentication request can be as follows.

2.1) It is checked whether a version number conforms to the standard;

2.2) It is checked whether a value of a data length field is consistent with a length of a data field;

2.3) Contents of a reference terminal certificate field and the locally stored reference terminal certificate contents are compared to determine whether they are identical;

2.4) Contents of an access-point-under-test certificate field and the locally stored access point certificate contents are compared to determine whether they are identical;

2.5) A value of an ASUE query field and a value of the ASUE query filed in an access authentication request packet sent by the reference terminal are compared to determine whether they are identical.

A process of analyzing and checking an access authentication response can be as follows.

3.1) It is checked whether a version number conforms to the standard;

3.2) It is checked whether a value of a data length field is consistent with a length of a data field;

3.3) Contents of a reference terminal certificate field in a reference terminal certificate authentication result information field in a composite certificate verification result and the locally stored reference terminal certificate contents are compared to determine whether they are identical, and it is checked whether a value of a reference terminal certificate authentication result code field is within a range defined in the standard;

3.4) Contents of an access-point-under-test certificate field in an access-point-under-test certificate authentication result information field and the locally stored access point certificate contents are compared to determine whether they are identical, and it is checked whether a value of an access-point-under-test certificate authentication result code field is within a range defined in the standard;

3.5) A value of a length sub-field in an AE signature field and a length of a content sub-field are compared to determine whether they are identical, and it is determined whether the value of the length sub-field in the AE signature field is consistent with a valid length value specified in the standard.

A process of analyzing and checking a unicast key negotiation request can be as follows.

4.1) It is checked whether a version number conforms to the standard;

4.2) It is checked whether a value of a data length field is consistent with a length of a data field;

4.3) It is verified whether a length of a BKID field is consistent with that specified in the standard;

4.4) It is checked whether values of a USKID field and an AE query field are consistent with those specified in the standard.

A process of analyzing and checking a unicast key negotiation confirmation can be as follows.

5.1) It is checked whether a version number conforms to the standard;

5.2) It is checked whether a value of a data length field is consistent with a length of a data field;

5.3) It is checked whether length fields of BKID, USKID, ADDID, ASUE, WIE and message authentication code fields are consistent with those specified in the standard.

A process of analyzing and checking a multicast key announcement can be as follows.

6.1) It is checked whether a version number conforms to the standard;

6.2) It is checked whether a value of a data length field is consistent with a length of a data field;

6.3) It is checked whether a value of an MSKID field is within a range specified in the standard;

6.4) It is checked whether a value of a USKID field is within a range specified in the standard;

6.5) It is checked whether length fields of ADDID, data serial number and key announcement identifier fields are consistent with those specified in the standard;

6.6) A value of a length sub-field in a key data field and a length of a content sub-field are compared to determine whether they are identical;

6.7) It is checked whether a length value of a message authentication code filed conforms to that specified in the standard.

A process of analyzing and checking a unicast data frame can be as follows.

7.1) It is checked whether a value of a session key index field is within a range specified in the standard;

7.2) It is checked whether a value of a data packet serial number field is within a range specified in the standard;

7.3) It is determined whether the value of the data packet serial number field is odd.

A process of analyzing and checking a multicast data frame can be as follows.

8.1) It is checked whether a value of a session key index field is within a range specified in the standard;

8.2) It is checked whether a value of a data packet serial number field is within a range specified in the standard.

In the analysis and check process of the embodiment, a pass condition is set as that the access point under test passes the protocol conformity test only if all the above check items are passed. In other words, the access point under test does not pass the test if any of the checks items is not passed.

In the invention, a step 250 can be added for testing a combination of WAPI enabling configurations at the access point under test and the reference terminal.

Step 250: Combinations of the respective WAPI enabling configurations at the reference terminal and the access point under test include as follows.

Correctness of the implementation of an access control function of the access point under test is determined by checking whether communication can be conducted between the access point under test and the reference terminal. Particularly, the combinations of WAPI enabling configurations at the reference terminal and the access point under test include the following scenarios.

9.1) The reference terminal enables a WAPI security mechanism with WAI pre-shared key authentication and key management, and the access point under test enables a WAPI security mechanism with certificate authentication and key management;

9.2) The access point under test enables the WAPI security mechanism with WAI pre-shared key authentication and key management, and the reference terminal enables the WAPI security mechanism with certificate authentication and key management.

In the above two scenarios, the test is passed if communication can not be conducted between the WAPI and the WPI of the reference terminal and the access point under test.

A sequence relationship of the test in step 250 with those in steps 210 to 240 is not limited. The step 250 can be executed before the step 210 or after the step 240 without influence on the effect thereof.

A conformity test device according to the invention may have a structure as shown in Figure 3, and include at least a data packet capture unit 310 and a data packet check unit 320. The conformity test device may further include a storage unit 330.

The data packet capture unit 310 captures a data packet of a secure access authentication protocol in a secure access authentication process at the access point under test and outputs the data packet to the data packet check unit 320. The data packet check unit 320 checks whether the captured data packet conforms to a preset condition, and if the captured data packet conforms to the preset condition, the conformity test is passed; otherwise, the conformity test is not passed.

The storage unit 330 may store an access point certificate of the access point under test, and if the preset condition includes an item to be checked by means of the access point certificate, the data packet check unit 320 reads the access point certificate upon making the corresponding check. The preset condition can be stored in the storage unit 330.

The preset condition used by the data packet check unit 320 may include the followings: the captured data packets of the secure access protocol are no less than preset types of data packets of the protocol, a sequence of capturing data packets of the secure access protocol conforms to a specification in the protocol, and/or fields encapsulated in the captured preset type of data packet of the secure access protocol conform to specifications in the protocol. For the access point under test which deploys the WAPI protocol, the preset type of data packets of the secure access protocol may include an authentication activation packet, a certificate authentication request, an access authentication response, a unicast key negotiation request, a unicast key negotiation confirmation, a multicast key announcement, a unicast data frame and/or a multicast data frame. The embodiments of the method described above can be made reference to for detailed descriptions of the data packets of the secure access protocol, and the descriptions are omitted hereinafter.

The invention is designed based upon a network access point, and can be used to test correctness and conformity of the secure access protocol implementation at an access point manufactured by a device manufacturer. With the invention, interoperability between the access point under test and a reference network terminal and authentication server is tested through an interoperability test of the protocol; furthermore, data of the secure access protocol is completely captured, parsed and analyzed, based on which a protocol flow analysis and an exception simulative test are implemented, thereby ensuring that any product passed the test completely conforms to the standard and interoperability. Therefore, the invention has the following advantages.

1. The test result is accurate. The invention introduces capturing of the relevant protocol data and a complete analysis method, so that the test result is more accurate.

2. The test data is complete. Because the test process involves complete capturing and analyzing of the data, detailed information of protocol data in a device under test can be given.

3. It is possible to conduct error locating. Because micro-checks are made on the execution process of the protocol, an error in the implementation of the protocol can be located precisely.

The embodiments of the invention described above are not intended to limit the scope of the invention, and any modifications, alternatives and improvements made without departing from the spirit and scope of the invention shall fall into the scope of the invention as defined in the appended claims.

## Claims

1. A method for testing conformity of a secure access protocol at an access point, comprising the steps of:
capturing a data packet of a secure access protocol in a secure access authentication process at an access point under test; and
analyzing and checking an encapsulation format of the captured data packet of the secure access protocol and a protocol flow.

2. The method of claim 1, wherein the secure access protocol is a WAPI protocol or an IEEE 802.11i protocol.

3. The method of claim 2, wherein when the secure access protocol is the WAPI protocol, the method further comprises: checking interoperability between the access point under test and a reference terminal in the case of a combination of WAPI enabling configurations at the reference terminal and the access point under test.

4. The method of claim 3, wherein the combination of WAPI enabling configurations at the reference terminal and the access point under test comprises:
the reference terminal enables a WAPI security mechanism with WAI pre-shared key authentication and key management, and the access point under test enables a WAPI security mechanism with certificate authentication and key management; and
the access point under test enables the WAPI security mechanism with WAI pre-shared key authentication and key management, and the reference terminal enables the WAPI security mechanism with certificate authentication and key management.

5. The method of claim 3, wherein the data packet of the secure access protocol comprises an authentication activation packet, an access authentication request, a certificate authentication request, a certificate authentication response, an access authentication response, a unicast key negotiation request, a unicast key negotiation response, a unicast key negotiation confirmation, a multicast key announcement and/or a multicast key announcement response in the WAI; and/or a unicast data frame and a multicast data frame in the WPI.

6. The method of claim 5, further comprising that the access point under test does not pass a test if the captured data packets of the secure access protocol are insufficient.

7. The method of claim 5, wherein for the authentication activation packet, the analyzing and checking the encapsulation format of the captured data packet of the secure access protocol comprises:
checking whether a version number conforms to a standard;
checking whether a value of a data length field is consistent with a length of a data field; and
verifying whether formats of an ASU identity field, a terminal certificate field and an ECDH parameter field are correct.

8. The method of claim 5, wherein for the certificate authentication request, the analyzing and checking the encapsulation format of the captured data packet of the secure access protocol comprises:
checking whether a version number conforms to a standard;
checking whether a value of a data length field is consistent with a length of a data field;
comparing contents of a reference terminal certificate field with locally stored reference terminal certificate contents to determine whether they are identical;
comparing contents of an access-point-under-test certificate field with locally stored access point certificate contents to determine whether they are identical; and
comparing a value of an ASUE query field with a value of the ASUE query filed in an access authentication request packet sent by the reference terminal to determine whether they are identical.

9. The method of claim 5, wherein for the access authentication response, the analyzing and checking the encapsulation format of the captured data packet of the secure access protocol comprises:
checking whether a version number conforms to a standard;
checking whether a value of a data length field is consistent with a length of a data field;
comparing contents of a reference terminal certificate field in a reference terminal certificate authentication result information field in a composite certificate verification result with locally stored reference terminal certificate contents to determine whether they are identical, and checking whether a value of a reference terminal certificate authentication result code field is within a range defined in the standard;
comparing contents of an access-point-under-test certificate field in an access-point-under-test certificate authentication result information field with locally stored access point certificate contents to determine whether they are identical, and checking whether a value of an access-point-under-test certificate authentication result code field is within a range defined in the standard; and
comparing a value of a length sub-field in an AE signature field with a length of a content sub-field to determine whether they are identical, and determining whether the value of the length sub-field in the AE signature field is consistent with a valid length value specified in the standard.

10. The method of claim 5, wherein for the unicast key negotiation request, the analyzing and checking the encapsulation format of the captured data packet of the secure access protocol comprises:
checking whether a version number conforms to a standard;
checking whether a value of a data length field is consistent with a length of a data field;
verifying whether a length of a BKID field conforms to the standard; and
checking whether values of a USKID field and an AE query field conform to the standard.

11. The method of claim 5, wherein for the unicast key negotiation confirmation, the analyzing and checking the encapsulation format of the captured data packet of the secure access protocol comprises:
checking whether a version number conforms to a standard;
checking whether a value of a data length field is consistent with a length of a data field; and
checking whether length fields of BKID, USKID, ADDID, ASUE, WIE and message authentication code fields conform to the standard.

12. The method of claim 5, wherein for the multicast key announcement, the analyzing and checking the encapsulation format of the captured data packet of the secure access protocol comprises:
checking whether a version number conforms to a standard;
checking whether a value of a data length field is consistent with a length of a data field;
checking whether a value of an MSKID field is within a range specified in the standard;
checking whether a value of a USKID field is within a range specified in the standard;
checking whether length fields of ADDID, data serial number and key announcement identifier fields are consistent with those specified in the standard;
comparing a value of a length sub-field in a key data field with a length of a content sub-field to determine whether they are identical; and
checking whether a length value of a message authentication code filed conforms to that specified in the standard.

13. The method of claim 5, wherein for the unicast data frame, the analyzing and checking the encapsulation format of the captured data packet of the secure access protocol comprises:
checking whether a value of a session key index field is within a range specified in a standard;
checking whether a value of a data packet serial number field is within a range specified in the standard; and
determining whether the value of the data packet serial number field is odd.

14. The method of claim 5, wherein for the multicast data frame, the analyzing and checking the encapsulation format of the captured data packet of the secure access protocol comprises:
checking whether a value of a session key index field is within a range specified in a standard;
checking whether a value of a data packet serial number field is within a range specified in the standard.

15. A method for testing conformity of a secure access protocol at an access point, comprising the steps of:
capturing a data packet of a secure access protocol in a secure access authentication process at an access point under test; and
passing a test when the captured data packet of the secure access protocol conforms to a preset condition.

16. The method of claim 15, wherein the preset condition comprises that the captured data packets of the secure access protocol are no less than preset types of data packets of the protocol.

17. The method of claim 15, wherein the preset condition comprises that a sequence of capturing data packets of the secure access protocol conforms to the protocol.

18. The method of any one of claims 15 to 17, wherein the preset condition comprises that fields encapsulated in the captured preset type of data packets of the secure access protocol conform to the protocol; and
wherein the preset type of data packets of the secure access protocol comprise an authentication activation packet, a certificate authentication request, an access authentication response, a unicast key negotiation request, a unicast key negotiation confirmation, a multicast key announcement, a unicast data frame and/or a multicast data frame.

19. The method of claim 15, wherein the secure authentication protocol is the WAPI protocol; and
the method further comprises: checking interoperability between the access point under test and a reference terminal in the case of a combination of WAPI enabling configurations at the access point under test and the reference terminal.

20. A device for testing conformity of a secure access protocol at an access point, comprising a data packet capture unit and a data packet check unit, wherein:
the data packet capture unit is adapted to capture a data packet of a secure access authentication protocol in a secure access authentication process at an access point under test; and
the data packet check unit is adapted to check whether the captured data packet conforms to a preset condition, and the test is passed if the captured data packet conforms to the preset condition.

21. The device of claim 20, wherein the preset condition comprises that the captured data packets of the secure access protocol are no less than preset types of data packets of the protocol.

22. The device of claim 20, wherein the preset condition comprises that a sequence of capturing data packets of the secure access protocol conforms to the protocol.

23. The device of any one of claims 20 to 22, further comprising a storage unit adapted to store an access point certificate of the access point under test.

24. The device of claim 23, wherein the preset condition comprises that fields encapsulated in the captured preset type of data packets of the secure access protocol conform to the protocol;
wherein the preset type of data packets of the secure access protocol comprise an authentication activation packet, a certificate authentication request, an access authentication response, a unicast key negotiation request, a unicast key negotiation confirmation, a multicast key announcement, a unicast data frame and/or a multicast data frame; and
the checking of whether the captured data packet conforms to the preset condition comprises checking by means of the certificate of the access point under test.

25. The device of claim 23, wherein the secure access protocol is a WAPI protocol.
